# EUROPEAN PATENT SPECIFICATION

(11) **EP 0 751 600 B1**
(45) Date of publication and mention of the grant of the patent: **26.03.2003**
(21) Application number: 96110169.8
(22) Date of filing: 24.06.1996
(51) Int. Cl.: H02H 5/10

(54) **Device for testing the earthing of an electric user, in particular the bodywork in electric vehicles**
Vorrichtung zum Prüfen der Erde eines elektrischen Verbrauchers, insbesondere der Karosserie eines Elektrofahrzeuges
Dispositif pour tester la connexion de masse d'un appareil électrique, notamment carrosserie d'un véhicule électrique

(30) Priority: 27.06.1995 IT TO950535
(43) Date of publication of application: 02.01.1997
(73) Proprietor: FIAT AUTO S.p.A., 10135 Torino (IT)
(72) Inventor: Guerzoni,Roberto, 10045 Piossasco (IT); Varrone,Piergiorgio, 10025 Pino Torinese (IT)
(74) Representative: Cerbaro, Elena, Dr.

(56) References cited:
- WO-A-91/18437
- GB-A- 2 167 618
- US-A- 4 931 893

## Description

The invention relates to a device for testing the earthing of an electric user, in particular the bodywork in electric vehicles.

As is known, for reasons of size and cost, in electric road vehicles the heat produced by the semi-conductor power devices and by the traction motor is disposed of by means of liquid dissipators. The cooling liquid comprises a mixture of non-demineralized water and anti-freeze and is not, therefore, electrically insulating. Consequently, for safety reasons, the dissipator is electrically connected to the bodywork. The semi-conductor power devices of the battery charger, which is supplied from the AC system, are fitted to this same dissipator. Every loss of insulation from such semi-conductor devices is therefore translated into a leakage current to the dissipator and hence to the bodywork. To prevent risks to human beings, therefore, the bodywork is connected to earth when the batteries are being re-charged. Furthermore, because of the thin insulations present in such semi-conductor devices, considerable stray capacitances with respect to the dissipator, and hence currents whose value is such as to be dangerous to persons, are present. These capacitances are never listed, but in 3 KW battery chargers they can reach 5000 pF overall. This means that a capacitive leakage current of approx. 1 mA, which is lethal to human beings, will form if it is not correctly transferred to earth by means of the appropriate line.

Potentially hazardous leakage currents are also caused by the fact that in order to comply with the standards relating to the elimination of harmonics in the system, the circuit for re-charging the battery is equipped with an input filter of the symmetrical/asymmetrical type which has considerable capacitances with respect to earth.

It is therefore clear that the interruption of the earth connection of the vehicle's bodywork in the course of battery re-charging constitutes an immediate and extremely serious risk of electrocution for the user, as the vehicle is resting on rubber and is therefore isolated from the ground. As the cable which connects the vehicle to the AC system is also inevitably of the "loose" type (even if constructed according to the rules of the art), it is subjected to frequent handling on the part of the user; the soundness of this cable cannot therefore be guaranteed for life, as the user is responsible for handling and looking after it.

Electrical energy distribution units are usually equipped with a differential protective switch capable of interrupting the energy supply when the current flowing in a supply line, generally known as "phase", exceeds by at least 30 mA the current flowing in the other supply line, generally known as "return line" or "neutral"; it does not therefore intervene if the accidental contact of the user between bodywork and ground, with the earth line not sound, causes a current exceeding 1 mA but less than 30 mA to flow in the user's body. In such cases, therefore, an immediate danger to the person's safety is created.

Finally, it is useful to note how the situations described above can also arise when the entire electric vehicle traction unit is constructed perfectly, according to current standards, and is operating perfectly, with no faults or tampering.

Devices are available on the market which enable both the earth connection and the operation of the differential switch to be tested. These devices introduce an arbitrary load between the mains and the earth, thus causing, if everything is in order, the interruption of the energy distribution on the part of the differential. The disadvantage of such devices lies in the fact that the test can only be performed at irregular intervals and on the user's initiative, so that a continuous and automatic test of the soundness of the unit is not permitted.

Finally, it is useful to recall that in the devices currently on the market, the test button of the differential switches closes an arbitrary load between one phase upstream and the other downstream of the differential, altogether excluding the associated conductor from an actual connection to earth and hence not testing the actual earthing of the users at all.

It is therefore essential to introduce a device which immediately interrupts the supply from the AC system to the vehicle when an efficient connection to earth of the bodywork is not present. For a correct allocation of the respective responsibilities, it is also necessary for the above-mentioned device, with associated safety isolating switch, to be on board the electric vehicle.

GB-A-2167 618 discloses an electrical protective circuit for protecting personnel from effects of a fault in the mains supply to electrical equipment. The circuit comprises a semiconductor circuit for sampling periodically for a predetermined period in each mains cycle at a relatively low voltage value a current flow between the live line of the mains supply and the local mains earth without significantly disturbing the earth potential in the power supply and providing an output signal indicative of the current flow, means for determining the value of the output signal in order to determine the value of the earth impedance and circuit breaker means controlled by the determining means for disconnecting the power supply from the equipment in the event of an unacceptably high earth impedance.

The object of the invention is to provide a device for testing the earthing of electric users which eliminates the risk to human beings in the conditions described above.

According to the invention a device is provided for testing the earthing of electric users, in particular the bodywork in electric vehicles, capable of being connected to electric lines comprising at least one first electrical energy supply line and one earth line; a contact of a safety switch being provided along said first supply line; said device comprising a monitoring section, connected to said electric lines, capable of monitoring the integrity of said earth line and of generating a control signal in the absence of integrity; characterized by further comprising an activation section for said safety switch, connected to said electric lines and capable of generating a current in said first supply line such as to cause the intervention of said safety switch, in the presence of said control signal.

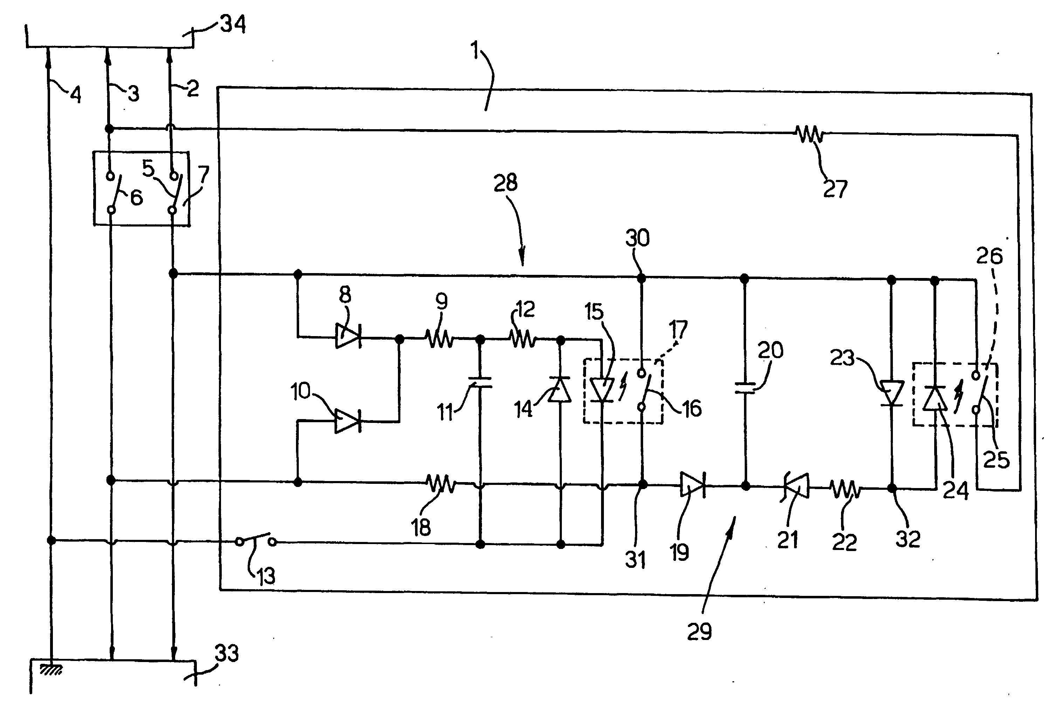

For a better understanding of the invention a preferred embodiment will now be described, purely by way of non-exhaustive example, with reference to the accompanying drawing, the sole figure of which shows a wiring diagram of the device.

In the sole figure, the device is denoted by 1. The device 1 is connected to a first supply line 2, to a second supply line 3 and to an earth line 4, which connect the traction unit of the electric vehicle, denoted in diagrammatic form by 33, to an electrical energy distribution unit, denoted in diagrammatic form by 34. Contacts 5 and 6 of a differential switch 7 are interposed respectively on the supply lines 2 and 3, which switch is located on board the vehicle and serves to interrupt the distribution of the electrical energy whenever currents which differ by at least 30 mA flow on the two supply lines (and in the event of overcurrents due to faults or short-circuits).

The device 1 comprises a monitoring section 28 connected to the lines 2, 3 and 4 and intended to monitor the integrity of the earth line and to generate a control signal in the absence of such integrity, and an intervention activation section 29 which is connected to the supply lines 2, 3, receives the control signal and is intended, when activated by the monitoring section, to generate a flow of current between the supply lines 2 and 3, the value of which is such as to cause the differential switch 7 to intervene.

In detail, the monitoring section 28 defines a current path of low value between one of the supply lines 2, 3 (line on which the voltage is present), on the one hand, and the earth line 4 on the other hand, and verifies the actual flow of current as proof of the integrity of the earth line 4. If the earth line 4 is interrupted, the monitoring section 28 detects the absence of the current flow and, by opening the switch 16, generates the control signal which activates the intervention activation section 29. In its turn the section 29 defines a current path between the supply lines 2 and 3, and the value of such current is greater than the intervention threshold of the differential switch 7. This current path, which is usually open, is closed by the control signal generated by the section 28 so that when the section 29 is activated, it causes the intervention of the differential switch 7, the opening of the contacts 5 and 6 and hence the interruption of the connection between electrical energy distribution unit 34 and the electric vehicle's traction unit 33.

The monitoring section 28 comprises a diode 8, the anode of which is connected to the supply line 2, downstream of the contact 5, and the cathode of which is connected to a first terminal of a resistor 9. The anode of a diode 10, the cathode of which is connected to the first terminal of the resistor 9, is connected to the supply line 3 downstream of the contact 6. The second terminal of the resistor 9 is connected both to a first terminal of a capacitor 11 and to a first terminal of a resistor 12. The second terminal of the resistor 12 is connected both to the cathode of a protective diode 14 and to the anode of a light-emitting diode (LED) 15. The light emitted by the LED 15 represents the control signal for the intervention activation section 29. The cathode of the LED 15, the anode of the protective diode 14 and the second terminal of the capacitor 11 are connected together to the earth line 4 by means of a test switch 13 which is usually closed. The purpose of this switch is to simulate the interruption of the earth line, so as to enable a test of the operation of the device 1 to be carried out.

The intervention activation section 29 comprises a switch 16 which, together with the LED 15, forms an opto-insulator 17, and is interposed between the supply line 2, downstream of the contact 5 (node 30), and a node 31. In its turn the node 31 is connected to the anode of a diode 19 and, across a resistor 18, to the supply line 3, downstream of the contact 6. The cathode of the diode 19 is connected both to the node 30, across a capacitor 20, and to the cathode of a Zener diode 21. The anode of the Zener diode 21 is connected to a node 32 across a resistor 22. Two diodes 23 and 24 are arranged in anti-parallel between the node 30 and the node 32. The diode 23, a protective diode, has the anode connected to the node 30 whilst the diode 24 is of the light-emitting type (LED) and, together with a switch 25, forms an opto-insulator 26. The switch 25 is interposed between the supply line 2, downstream of the contact 5 (node 30) and, across a resistor 27, the supply line 3, upstream of the contact 6.

The components CS6005 made by International Rectifiers, which guarantee the desired voltage levels, low leakage currents and a current in the LEDs 15, 24 of only 5 mA, well below the 30 mA which the differential switch 7 takes as the tripping value, are preferably used as opto-insulators 17 and 26.

The operation of the device 1 is as follows. The AC mains voltage present on the line 2, 3 operating at this time as "phase" is rectified by the diode 8 or 10 connected to the phase line itself and filtered by the RC unit formed by the resistor 9 and the capacitor 11. In fact, in the distribution of electrical energy with earthed neutral, one of the two phases 2, 3 is at the earth potential and the other constitutes the supply proper. The presence of the two diodes 8 and 10 thus permits a casual connection of the two phases 2 and 3. Consequently, independently of the line 2 or 3 on which the mains voltage is present, a DC voltage is present across the capacitor 11. Therefore, a current (limited by the resistor 12 itself to 5 mA) passes through the resistor 12, which current supplies the LED 15 of the opto-insulator 17, permitting the closure of the switch 16 and hence the short-circuiting of the nodes 30 and 31. The supply lines 2 and 3, downstream of the differential switch 7, are thus connected across the resistor 18 of a value such as to limit the current flowing between the two lines. The short-circuit between the nodes 30 and 31 prevents the charging of the capacitor 20 across the diode 19; consequently current does not pass through the LED 24, the switch 25 is open and there is no connection between the lines 2 and 3 across the resistor 27. The section 29 is therefore inactive.

When the connection of the earth line 4 is interrupted, no current flows in the LED 15 and the switch 16 opens; the capacitor 20 can now be charged across the resistor 18 and the diode 19. As soon as the triggering voltage of the Zener diode 21 is exceeded, the current (limited by the resistor 22) supplies the LED 24 of the opto-insulator 26, thus permitting the closure of the switch 25. The resistor 27 thus becomes connected between the supply lines 2, downstream of the contact 5, and 3, upstream of the contact 6, and is such as to generate a current greater than 30 mA between the said lines 2 and 3. This current is detected by the differential switch 7 which consequently opens the contacts 5 and 6, and removes supply both from the device 1 itself and from the traction unit.

If the mains voltage is present on the line 3, the device 1 remains connected to it, across the resistor 27, upstream of the differential switch 7; this does not, however, constitute a hazard to persons insofar as the leakage current of the switch 25 is of the order of a few tens of Amps.

To prevent an incorrect intervention by the differential switch 7 in the course of the ignition transient of the device 1, the time constant of the unit formed by the resistor 9 and the capacitor 11 is less than that of the unit formed by the resistor 18 and the capacitor 20.

The device 1 has the following advantages. Firstly, it enables the connection between the distribution unit and the traction unit of the vehicle to be interrupted immediately as soon as the earth line is interrupted, thus safely preventing dangerous leakage currents from being able to reach the user through contact with the bodywork. The device described is also simple, reliable and uses inexpensive components, and thus offers reduced costs overall.

Finally, it is clear that modifications and variations can be made to the test device described and illustrated. In particular, it is possible to insert a further controlled switch on the supply line 3 upstream of the connection to the device 1 or in series with the resistor 27 to prevent any leakage currents through the switch 25 from reaching the vehicle. Alternatively, it is possible to use a separate differential switch for the sole testing of the integrity of the earth line (and of the associated leakage currents) with its own contacts arranged in series with the contacts of the differential switch already provided.

## Claims

1. Device (1) for testing the earthing of an electric user (33), in particular the bodywork in electric vehicles, capable of being connected to electric lines (2-4) comprising at least one first electrical energy supply line (2) and one earth line (4), a contact (5) of a safety switch (7) being provided along said first supply line; said device (1) comprising a monitoring section (28), connected to said electric lines, capable of monitoring the integrity of said earth line and of generating a control signal in the absence of integrity; **characterized by** further comprising an activation section (29) for said safety switch, connected to said electric lines and capable of generating a current in said first supply line such as to cause the intervention of said safety switch, in the presence of said control signal.

2. Device according to Claim 1, **characterized in that** said monitoring section (28) comprises a first current path arranged between said first supply line (2) and said earth line (4), detection means (15) capable of detecting the flow of current flowing along said current path and of generating said control signal in the absence of said current flow.

3. Device according to Claim 2, **characterized in that** said current path comprises first rectifying and filtering means (8, 9, 11) and **in that** said detection means comprise opto-electronic means (15) connected downstream of said first rectifying and filtering means and capable of generating an optical signal in the presence of current.

4. Device according to Claim 3, **characterized in that** said first rectifying and filtering means (8, 9, 11) comprise an RC unit (9, 11) and a first diode (8) connected between said first supply line (2) and said RC unit and **in that** it comprises resistive current-limiting means (12) in series with said opto-electronic means (17).

5. Device according to Claim 4, in which said electric lines (2-4) comprise a second supply line (3), **characterized in that** said first rectifying and filtering means (8, 9, 11) comprise a second diode (10) connected between said second supply line and said RC unit (9, 11), said first and second diode (8, 10) having homologous terminals connected together to said RC unit.

6. Device according to one of the preceding Claims, in which said electric lines (2-4) comprise a second supply line (2), **characterized in that** said activation section (29) comprises a second current path interposed between said first and said second supply line (2, 3) and having a switch unit (16-26) controlled by said control signal and resistive means (27) capable of generating said current.

7. Device according to Claim 6, **characterized in that** said controlled switch unit (16-26) comprises second rectifying and filtering means (18-20) between said first and said second supply line (2, 3) and generating an output voltage; a first controlled switch (16) connected to said second rectifying and filtering means, said first switch being controlled by said control signal and de-activating said second rectifying and filtering means in the presence of said control signal; a threshold element (21) connected to said second rectifying and filtering means capable of generating a control signal when said output voltage of said second rectifying and filtering means reaches a pre-determined threshold, and a switch stage (26) arranged in series with said resistive means (27) and capable of closing in the presence of said control signal.

8. Device according to Claim 7, **characterized in that** said second rectifying and filtering means (18-20) comprise a capacitor (20) and a resistor (18) connected reciprocally in series between said first and second supply line (2, 3); **in that** said first controlled switch comprises an opto-electronic element (16) arranged in parallel with said capacitor; **in that** said switch stage (26) forms an opto-insulator including a light-emitting element (24) in parallel with said capacitor and a light-receiving element (25) in series with said resistive means (27); and **in that** said threshold element comprises a Zener diode (21) arranged in series with said light-emitting element.

9. Device according to one of the preceding Claims, **characterized in that** it comprises a test switch (13) interposed between said earth line (4) and said monitoring section (28).

10. Device according to one of the preceding Claims, **characterized in that** said safety switch is a differential switch.

## Patentansprüche

1. Vorrichtung (1) zum Prüfen der Erdung eines elektrischen Verbrauchers (33), insbesondere des Aufbaus bei Elektrofahrzeugen, die an elektrische Leitungen (2-4) angeschlossen werden kann, die zumindest eine erste elektrische Energieversorgungsleitung (2) und eine Erdleitung aufweisen, wobei ein Kontakt (5) eines Sicherheitsschalters (7) längs der ersten Versorgungsleitung vorgesehen ist; wobei die Vorrichtung (1) einen Überwachungsabschnitt (28) aufweist, der an die elektrischen Leitungen angeschlossen ist, der in der Lage ist, die Integrität der Erdleitung zu überwachen und ein Kontrollsignal bei Abwesenheit der Integrität zu erzeugen;
**dadurch gekennzeichnet, dass** sie weiterhin einen Aktivierungsabschnitt (29) für den Sicherheitsschalter aufweist, der an die elektrischen Leitungen angeschlossen ist und in der Lage ist, einen Strom in der ersten Versorgungsleitung zu erzeugen, so, dass in der Gegenwart des Kontrollsignals das Eingrelfen des Sicherheitsschalters bewirkt wird.

2. Vorrichtung nach Anspruch 1, **dadurch gekennzeichnet, dass** der Überwachungsabschnitt (28) einen ersten Strompfad, der zwischen der ersten Versorgungsleitung (2) und der Erdleitung (4) angeordnet ist, eine Detektionseinrichtung (15), die in der Lage ist, den Fluss des Stroms zu detektieren der entlang des Strompfads fließt, und das Kontrollsignal bei Abwesenheit des Stromflusses zu erzeugen, aufweist.

3. Vorrichtung nach Anspruch 2, **dadurch gekennzeichnet, dass** der Strompfad erste Gleichrichtungs- und Filtereinrichtungen (8, 9,11) aufweisen, und dadurch dass die Detektionseinrichtung eine opto-elektronische Einrichtung (15) aufweist, die stromabwärts von den ersten Gleichrichtungs- und Filtereinrichtungen angeschlossen ist, und fähig ist, ein optisches Signal bei Anwesenheit von Strom zu erzeugen.

4. Vorrichtung nach Anspruch 3, **dadurch gekennzeichnet, dass** die ersten Glelchrichtung-und Filtereinrichtungen (8, 9, 11) eine RC-Einheit (9, 11) und eine erste Diode (8) aufweisen, die zwischen der ersten Versorgungsleitung (2) und der RC-Einheit (9, 11) eingeschaltet sind, und dadurch, dass sle eine resistive Strombegrenzungseinrichtung (12) in Serie mit der opto-elektronischen Einrichtung (17) aufweist.

5. Vorrichtung nach Anspruch 4, wobei die elektrischen Leitungen (2-4) eine zweite Versorgungsleitung (3) aufweisen, **dadurch gekennzeichnet, dass** die ersten Gleichrichtungs-und Filtereinrichtungen (8, 9, 11) eine zweite Diode (10) aufweisen, die zwischen der zweiten Versorgungsleitung und der RC-Einheit (9, 11) angeschlossen ist, wobei die erste und zweite Diode (8, 10) homologe Anschlusspunkte aufweist, die zusammen an die RC Einheit angeschlossen sind.

6. Vorrichtung nach einem der vorhergehenden Ansprüche, wobei die elektrischen Leitungen (2-4) eine zweite Versorgungslinie (2) aufwetsen, **dadurch gekennzeichnet, dass** der Aktivierungsabschnitt (29) einen zweiten Strompfad aufweist, der zwischen der ersten und der zweiten Versorgungsleitung (2, 3) eingeschaltet ist und eine Schaltereinheit (16-26) aufweist, die von dem Steuersignal und der resistiven Einrichtung (27) gesteuert wird, die fähig ist, diesen Strom zu erzeugen.

7. Vorrichtung nach Anspruch 6, **dadurch gekennzeichnet, dass** die gesteuerte Schaltereinheit (16-26) aufweist: zweite Gleichrichtungs-und Filtereinrichtungen (18-20) zwischen der ersten und der zweiten Versorgungsleitung (2,3), die eine Ausgangsspannung erzeugen; einen ersten gesteuerten Schalter (16), der an den zweiten Gleichrichtungs-und Filtereinrichtungen angeschlossen ist, wobei der erste Schalter von dem Steuersignal gesteuert wird und die zweiten Gleichrichtungs-und Filtereinrichtungen bei Anwesenheit des Steuersignals deaktiviert; ein Schwellenelement (21), das an die zweite Gleichrichtungs-und Filtereinrichtungen angeschlossen ist, die fähig sind, ein Steuersignal zu erzeugen, wenn die Ausgangsspannung der zweiten Gleichrichtungs-und Filtereinrichtungen eine vorbestimmte Schwelle erreicht, und eine Schalterstufe (26), die in Serie mit der resistiven Vorrichtung (27) angeordnet ist und in der Lage ist, bei Vorhandensein des Kontrollsignals zu schließen.

8. Vorrichtung nach Anspruch 7, **dadurch gekennzeichnet, dass** die zweiten Gleichrichtungs- und Filtervorrichtungen (18-20) einen Kondensator und einen Widerstand (18) aufweisen, die reziprok hintereinander zwischen der ersten und zweiten Versorgungslinie (2, 3) angeschlossen sind; dadurch, dass der erste gesteuerte Schalter ein opto-elektronisches Element (16) aufweist, dass parallel zu dem Kondensator angeordnet ist; dadurch dass die Schalterstufe (26) einen Opto-Isolator bildet, der ein emittierendes Lichtelement (24) parallel zu dem Kondensator und ein Licht empfangendes Element (25) in Serie mit der resistiven Vorrichtung (27) einschließt; und dadurch dass das Schwellenelement eine Zenerdiode (21) aufweist, die in Serie mit dem Licht emitierenden Element angeordnet ist.

9. Vorrichtung nach einem der vorangehenden Ansprüche, **dadurch gekennzeichnet, dass** sie einen Prüfschalter (13) aufweist, der zwischen der Erdleitung (4) und dem Überwachungsabschnitt (28) eingeschaltet ist.

10. Vorrichtung nach einem der vorangehenden Ansprüche, **dadurch gekennzeichnet, dass** der Sicherheitsschalter ein Differenzialschalter ist.

## Revendications

1. Dispositif (1) pour tester la connexion de masse d'un appareil électrique (33), en particulier la carrosserie de véhicules électriques, qui peut être connecté à des lignes électriques (2-4) comprenant au moins une première ligne d'alimentation en énergie électrique (2) et une ligne de terre (4), un contact (5) d'un disionctéur de sécurité (7) étant prévu sur ladite première ligne d'alimentation, ledit dispositif (1) comprenant une section de surveillance (28), connectée auxdites lignes électriques, qui peut contrôler l'intégrité de ladite ligne de terre et engendrer un signal de commande en l'absence d'intégrité ; **caractérisé en ce qu'**il comprend en outre une section d'activation (29) pour ledit disjoncteur de sécurité, connectée auxdites lignes électriques et pouvant engendrer un courant dans ladite première ligne d'alimentation de façon à provoquer le déclenchement dudit disjoncteur de sécurité, en la présence dudit signal de commande.

2. Dispositif selon la revendication 1, **caractérisé en ce que** ladite section de surveillance (28) comprend un chemin de courant agencé entre ladite première ligne d'alimentation (2) et ladite ligne de terre (4), des moyens de détection (15) pouvant détecter la circulation de courant le long dudit chemin de courant et engendrer ledit signal de commande en l'absence de ladite circulation de courant.

3. Dispositif selon la revendication 2, **caractérisé en ce que** ledit chemin de courant comprend des premiers moyens de redressement et de filtrage (8, 9, 11), et **en ce que** lesdits moyens de détection comprennent des moyens optoélectroniques (15) connectés en aval desdits premiers moyens de redressement et de filtrage et pouvant engendrer un signal optique en la présence de courant.

4. Dispositif selon la revendication 3, **caractérisé en ce que** lesdits premiers moyens de redressement et de filtrage (8, 9, 11) comprennent une unité RC (9, 11) et une première diode (8) connectée entre ladite première ligne d'alimentation (2) et ladite unité RC, et **en ce qu'**il comprend des moyens résistifs de limitation de courant (12) en série avec lesdits moyens optoélectroniques (17).

5. Dispositif selon la revendication 4, dans lequel lesdites lignes électriques (2-4) comprennent une deuxième ligne d'alimentation (3), **caractérisé en ce que** lesdits premiers moyens de redressement et de filtrage (8, 9, 11) comprennent une deuxième diode (10) connectée entre ladite deuxième ligne d'alimentation et ladite unité RC (9, 11), lesdites première et deuxième diodes (8, 10) ayant des bornes homologues connectées ensemble à ladite unité RC.

6. Dispositif selon une des revendications précédentes, dans lequel lesdites lignes électriques (2-4) comprennent une deuxième ligne d'alimentation (2), **caractérisé en ce que** ladite section d'activation (29) comprend un deuxième chemin de courant interposé entre lesdites première et deuxième lignes d'alimentation (2, 3) et comportant un dispositif de contact (16-26) commandé par ledit signal de commande et des moyens résistifs (27) pouvant engendrer ledit courant.

7. Dispositif selon la revendication 6, **caractérisé en ce que** ledit dispositif de contact commandé (16-26) comprend des deuxièmes moyens de redressement et de filtrage (18-20) placés entre lesdites première et deuxième lignes d'alimentation (2, 3) et engendrant une tension de sortie ; un premier contact commandé (16) connecté auxdits deuxièmes moyens de redressement et de filtrage, ledit premier contact étant commandé par ledit signal de commande et désactivant lesdits deuxièmes moyens de redressement et de filtrage en la présence dudit signal de commande ; un élément de seuil (21) connecté auxdits deuxièmes moyens de redressement et de filtrage et pouvant engendrer un signal de commande lorsque ladite tension de sortie desdits deuxièmes moyens de redressement et de filtrage atteint un seuil prédéterminé, et un dispositif de contact (26) disposé en série avec lesdits moyens résistifs (27) et pouvant se fermer en la présence dudit signal de commande.

8. Dispositif selon la revendication 7, **caractérisé en ce que** lesdits deuxièmes moyens de redressement et de filtrage (18-20) comprennent un condensateur (20) et une résistance (18) connectés mutuellement en série entre lesdites première et deuxième lignes d'alimentation (2, 3) ; **en ce que** ledit premier contact commandé comprend un élément opto-électronique (16) agencé en parallèle avec ledit condensateur ; **en ce que** ledit dispositif de contact (26) forme un dispositif opto-isolant incluant un élément d'émission de lumière (24) en parallèle avec ledit condensateur et un élément de réception de lumière (25) en série avec lesdits moyens résistifs (27) ; et **en ce que** ledit élément de seuil comprend une diode Zener (21) agencée en série avec ledit élément d'émission de lumière.

9. Dispositif selon une des revendications précédentes, **caractérisé en ce qu'**il comprend un contact de test (13) interposé entre ladite ligne de terre (4) et ladite section de surveillance (28).

10. Dispositif selon une des revendications précédentes, **caractérisé en ce que** ledit disjoncteur de sécurité est un disjoncteur différentiel.
